# EUROPEAN PATENT APPLICATION

(11) **EP 0 619 506 A2**
(43) Date of publication of application: **12.10.1994**
(21) Application number: 94301936.4
(22) Date of filing: 18.03.1994
(51) Int. Cl.: G02B 6/28

(54) **Producing an optical fiber tap coupler**

(30) Priority: 05.04.1993 GB 9307110
(71) Applicant: THE WHITAKER CORPORATION, Wilmington, Delaware 19808 (US)
(72) Inventor: van Woesik, Egbertus Theodorus C.M., NL-5237 LA s'-Hertogenbosch (NL)
(74) Representative: Warren, Keith Stanley

(57) **Abstract**

A throughput fibre (4) for an optical fibre tap coupler is provided with an elliptical optical surface (8) by positioning the throughput fibre (4) in a circular groove (20) in a stainless steel jig (10) and polishing or cutting away a portion (4') of the throughput fibre (4), which portion (4') projects beyond flats (24) of the jig (10), the flats (24) being tangential to the groove (20). A tap fibre (6) for the coupler is provided with inclined, end elliptical optical surface (14) by inserting the fibre (6) through a bore (42) in a further stainless steel jig and polishing or cutting away a portion of the tap fibre (6) which projects beyond an inclined surface of the jig. The angle of the inclined surface in relation to the longitudinal axis of the bore determines the area of the end optical surface (14).

## Description

This invention relates to the production of an optical fibre tap coupler comprising an optical throughput fibre and an optical tap fibre.

It is desirable to provide coupling between optical fibres, so-called tap couplers, for the splitting of optical signals from a single fibre. This is normally accomplished by joining the fibres in some manner.

It is shown in U.S. Patent 4,669,820 where two fibres can be joined by grinding the surfaces of the fibres and joining them together. While this is in principal a good splicing technique, improvements have been made to this teaching making substantial enhancements to the tap connection. In the teaching of U.S. Patent 4,669,820, the fibres are ground to a position well into the core of the material, and then joined such that the joined fibre center is not at the apex of the fiber, but rather offset from it. As the evanescent and refractive coupling of the fibres is maximized at the apex, the coupling is not as efficient as it could be. Furthermore, the fibre is not ground at the free end of the fibre which too would have an effect on the optical quality of the splice.

It is an object of the invention therefore to provide an improved optical tap fibre.

In order to provide an effective optical connection between the throughput fibre and the tap fibre, the throughput fibre must be formed with an elliptical optical surface extending lengthwise thereof and the tap fibre must be formed with an elliptical optical surface extending obliquely across an end of the tap fibre.

The present invention is intended to provide a tap coupler and a method of producing the same, as well as an apparatus for, accurately forming said elliptical optical surfaces so that a desired light splitting ratio and low light loss are achieved.

According to one aspect thereof, an optical fibre tap coupler (2), comprises a length of throughput fibre (4), and a tap fibre (6), where the tap coupler is characterized in that the throughput fibre (4) includes a first elliptical optical surface (8) extending lengthwise of the throughput fibre (4) and an end of the tap fibre (6) includes a second elliptical optical surface (14) extending obliquely across said end of the tap fibre (6), the two optical surfaces being joined to form an optical interface.

According to another aspect thereof, the invention consists in a method of preparing an optical throughput fibre and/or a plastic optical tap fibre, for an optical tap coupler, the method being characterized by the steps of: forming intermediate the length of the throughput fibre, a first elliptical optical surface extending lengthwise of the throughput fibre; and/or forming on an end of the tap fibre, a second elliptical optical surface extending obliquely across the said end of the tap fibre, and joining the two elliptical surfaces.

In the preferred method, the first and/or the second optical surface is produced by the steps of; confining the optical fibre in a jig so that a predetermined portion of the fibre projects from at least one flat surface of the jig; and removing said projecting predetermined portion by polishing it or cutting it away, up to said at least one flat surface, thereby to produce said elliptical optical surface.

The location of the fibre in relation to the flat surface or surfaces of the jig can accurately be determined during the manufacture of the jig so that an optical surface of the desired dimensions can be produced on the fibre, no great skill being required in order to achieve this. Although the projecting predetermined portion of the fibre is, for optimum results, removed by polishing, adequate results may be achieved, for example in the field, where the fibre is of plastic material, by cutting away said predetermined portion, by means of a razor blade.

According to another aspect thereof the present invention consists in a jig for use in forming an optical throughput fibre for an optical tap coupler, with an elliptical optical surface extending lengthwise of the throughput fibre, the jig comprising a block made of a hard material, for example stainless steel, and having formed therein an arcuate peripheral fibre receiving groove having a base of a predetermined cross sectional radius, respective flats of a pair of opposed, elongate flats bounding each side of the groove and being tangential therewith so that the depth of the groove is progressively reduced towards the longitudinal centre of the flats to a predetermined fraction of said predetermined cross sectional radius.

The depth of the groove will determine the area of the optical surface formed on a throughput fibre, and thus the light splitting ratio of the optical coupler which is to comprise the throughput fibre.

The groove may be circular, a plurality of said pairs of flats being distributed about the circumference of the groove and each pair of flats progressively reducing the depth of the groove towards the longitudinal centre of the flats of the pair to a different predetermined fraction of said predetermined radius. Thus the jig can be used to prepare throughput fibers for optical couplers having different light splitting ratios.

According to a further aspect thereof, the present invention consists in a jig for use in forming on an end of a tap fibre for an optical tap coupler, an elliptical optical surface extending obliquely across said tap fibre, the jig comprising a block made of a hard material, for example stainless steel, having a through, fibre receiving, rectilinear bore, opening at one end into a first surface of the block, the opposite end of the bore opening into a flat second surface of the block, the flat second surface being inclined by a predetermined angle with respect to the longitudinal axis of the bore whereby the bore has an elliptical mouth opening into the inclined second surface.

The angle of the flat second surface, which may for example be 15°, determines the area of the elliptical optical surface to be provided on the tap fibre. Thus the jig will be constructed so that the flat second surface is angled according to the area of the optical surface to be produced on a through fibre to which the tap fibre is to be optically connected to produce an optical tap coupler.

The optical coupler may be produced by laying the throughput fibre in an arcuate groove in a flat surface of an optical tap coupler housing, the radius of the arcuate groove of the housing being equal to the radius of the arcuate groove in the jig for the throughput fibre, laying the tap fibre in a rectilinear groove in the flat surface of the housing, which groove communicates with the arcuate groove in the flat surface of the housing, with the optical surface of the tap fibre in alignment with the optical surface of the throughput fibre, and optically connecting said optical surfaces by means of a refractive index matching medium thereby to produce the coupler.

The advantage of making the radius of the arcuate groove in the housing, equal to the radius of the arcuate groove in the jig for the throughput fibre, is that by virtue of its plastic memory, the throughput fibre retains the radius of the arcuate groove in the jig so that when the throughput fibre is laid in the arcuate groove of the housing it cannot rotate so as to cause misalignment between the optical surfaces of the throughput fibre and the tap fibre.

An embodiment of the present invention will now be described by way of example with reference to the accompanying drawings in which;
Figure 1 is an enlarged isometric view of an optical fibre tap coupler;
Figure 2 is an enlarged isometric view of the throughput fibre of the coupler, when prepared for connection to the tap fibre thereof;
Figure 3 is an enlarged isometric view of the tap fibre when prepared for connection to the throughput fibre;
Figure 4 is an enlarged side view, not drawn to scale, of a jig for preparing the throughput fibers of optical fibre tap couplers, for optical connection to the tap fibers thereof, one optical fibre being shown in the jig;
Figure 5 is an end view of the jig of Figure 4;
Figure 6 is an enlarged top plan view of a jig for preparing the tap fibers of optical fibre tap couplers for optical connection to the throughput fibers thereof;
Figure 7 is a view taken on the lines 7-7 of Figure 6;
Figure 8 is an enlarged fragmentary sectional view illustrating details of Figure 7 and showing part of an optical cable in the jig;
Figure 9 is an enlarged isometric view of a housing of a fibre optic tap connector; and
Figure 10 is an enlarged isometric view showing the fibre optical tap coupler assembled to the housing to provide the tap connector, and fibre optic cables connected to the fibre optic tap coupler.

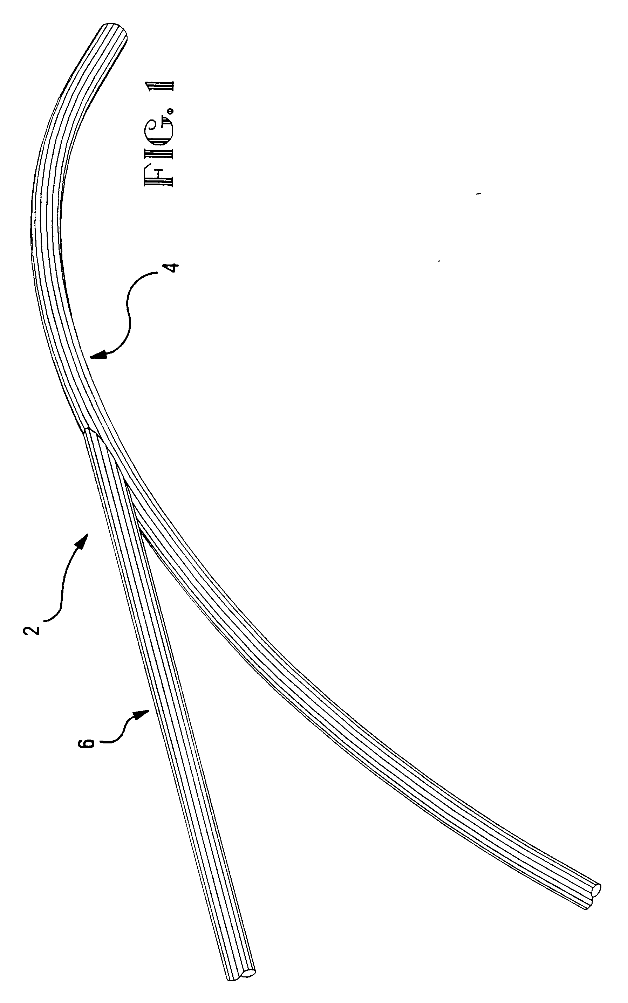

As shown in Figure 1 a fibre optic coupler 2 comprises a throughput plastic optical fibre 4 and a tap plastic optical fibre 6. The fibers 4 and 6 are without protective jackets, the cladding of the fibers accordingly being exposed. For use in temperature ranges of -40°C to +85°C, the fibers 4 and 6 are preferably made of polymethyl methacrylate, and for use in temperature ranges of -40°C to +125°C the fibers 4 and 6 are preferably made of polycarbonate. In the present example, the outside diameter of each of the fibers 4 and 5 is 1,000 micrometers, where the fibre core is 960 micrometers with a 20 micrometer thick cladding therearound.

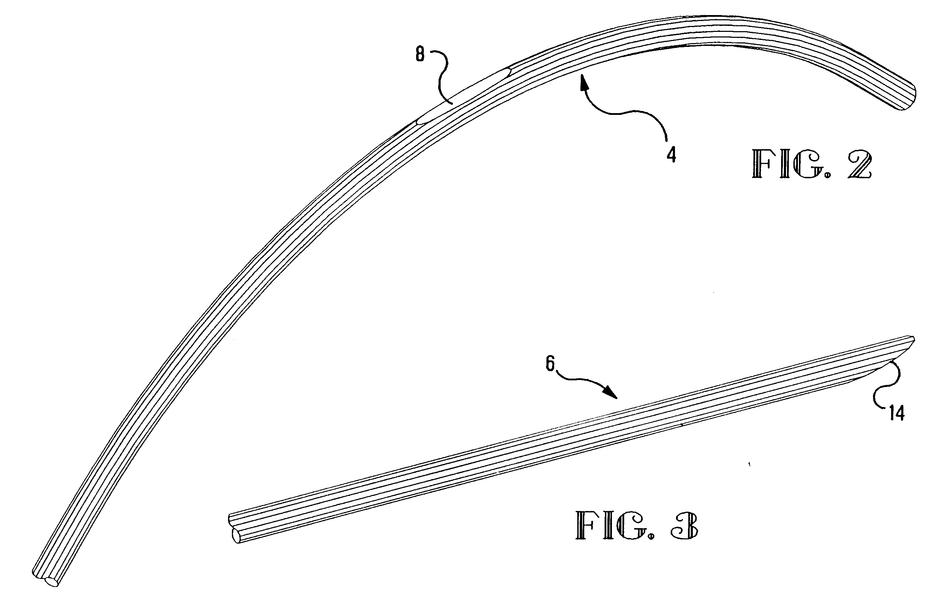

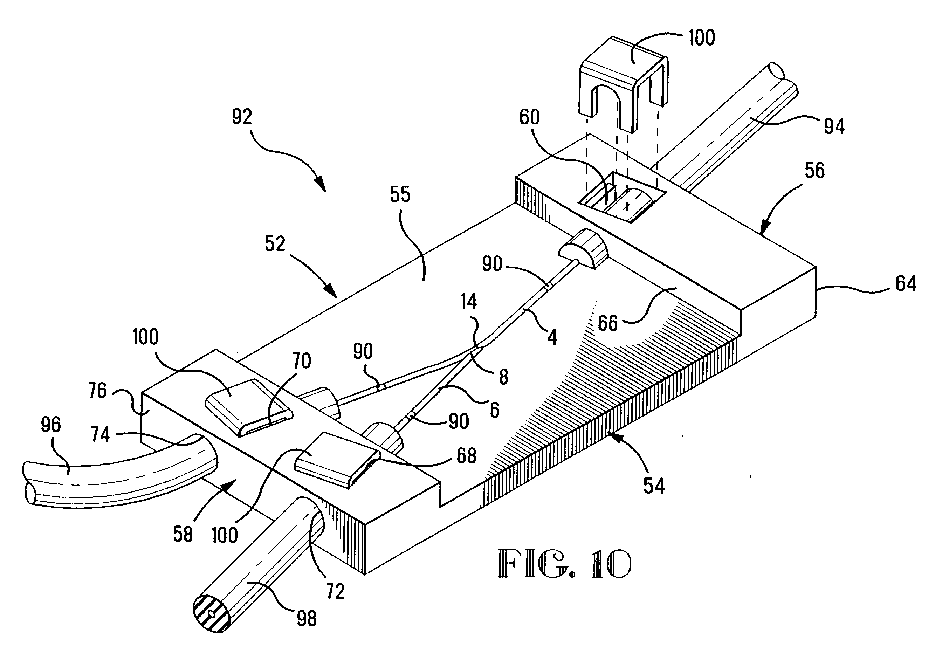

A method of producing the tap coupler 2 will now be described with reference to Figures 2 to 10.

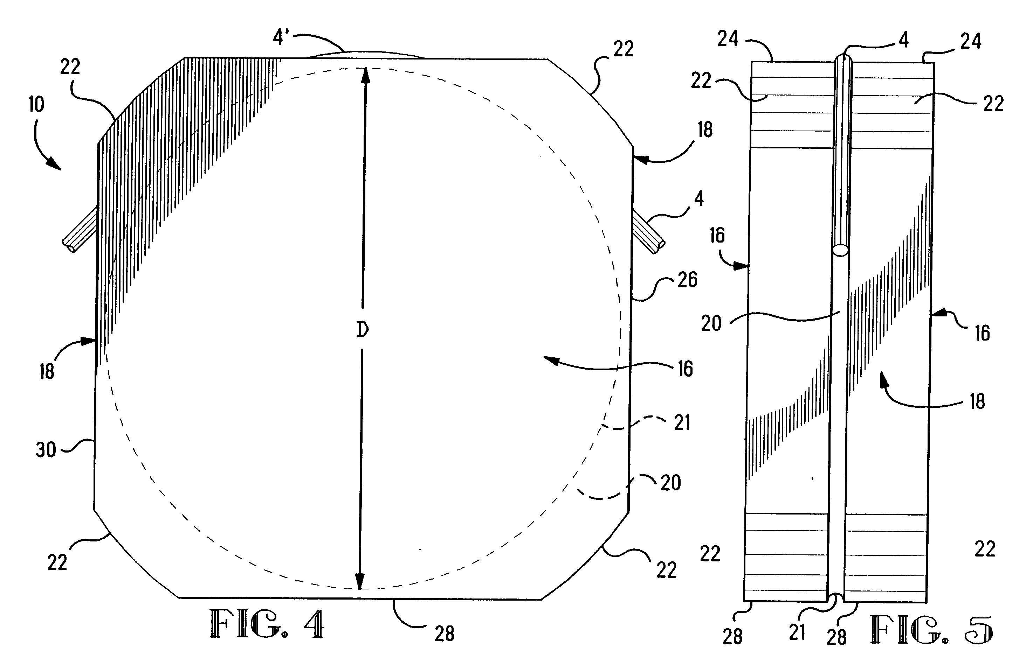

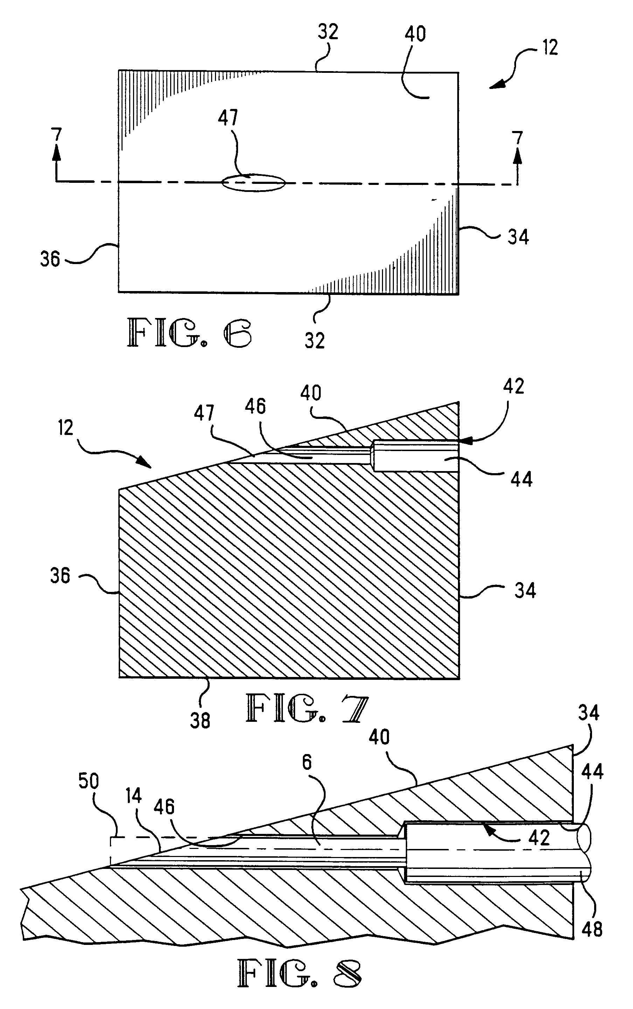

The throughput fibre 4 is prepared for optical connection with the tap fibre 6 by producing a flat, elliptical, axially extending optical surface 8 on the fibre 4 as shown in Figure 2, with the aid of a first jig 10 which is shown in Figures 4 and 5. The tap fibre 6 is prepared for optical connection to the throughput fibre 4 by producing, with the aid of a second jig 12, which is shown in Figures 6 to 8, an inclined elliptical flat end surface 14 on the fibre 6 which surface is complimentary with the optical surface 8 of the fibre 4.

The jig 10, which is preferably made of a hard, corrosion resistant material, for example stainless steel, is in the form of a one piece block having opposite major flat sides 16 and a peripheral surface 18 therebetween. The jig 10 is of substantially equal height and width, the thickness of the jig 10 being equal to some 0.4 times its height or width. There extends into the peripheral surface 18, centrally of its width, as shown in Figure 5, a continuous circular peripheral groove 20 having an inside diameter D of 50 mm and a radially inwardly bowed, constant cross section, smoothly arcuate base 21. The base 21 has a cross sectional radius of 0.51 mm for receiving the throughput fibre 4 with minimal clearance. The peripheral surface 18 has four symmetrically arranged arcuate portions on each side of the groove 20, each portion 22 having a radius of 28 mm. The peripheral surface 18 is formed with four flats 24, 26, 28 and 30, respectively, on each side of the groove 20 and being tangential therewith, each of these flats being located between two of the arcuate portions 22. The arcuate base 21 of the groove 20 is spaced radially inwardly from the peripheral surface 18 to the greatest extent along the arcuate portions 22 and to a progressively smaller extent towards the longitudinal centers of the flats 22, 26, 28 and 30. The depth of the groove 20 at the centre of the flat 24 is 0.925 mm, the depth of the groove 20 at the centre of the flat 26 is 0.930 mm, the depth of the groove 20 at the centre of the flat 28 is 0.915 mm and the depth of the groove 20 at the centre of the flat 30 is 0.920 mm; according to the present example.

In order to produce an optical surface 8 on the throughput fibre 4, having a depth of 0.075 mm, the fibre 4 is laid in the groove 20, as shown in Figure 4, to extend between the flats 24 and between the arcuate portions 22 of each of the two pairs of portions 22 which are adjacent to the flats 24. With the fibre so positioned, a segment 4' of the fibre 4, having a length of 3.864 mm, projects to a maximum extent of 0.075 mm radially outwardly of the flats 24. With the fibre 4 secured in this position the segment 4' is polished away down to the surfaces of the flats 24, thereby producing an optical surface 8 of a depth of 0.075 mm, a width of 0.526 mm, and a length of 3.864 mm. The throughput fibre 4 is then cut to a desired length and the ends thereof are preferably polished to provide flat optical surfaces extending normally of the longitudinal axis of the fibre. Although it is preferred that the segment 4' is removed by polishing, it may, be cut away, by means of a razor blade. By reason of its plastic memory, the throughput fibre 4 retains the radius, namely 25 mm, to which it was bent around the base 21 of the groove 20.

Each pair of the flats 24, 26, 28 and 30 is dimensioned relative to the groove 20, to enable a throughput fibre 4 to be provided with an optical surface of a different depth. Thus, if the depth of the optical surface 8 is to be 0.070 mm, then the fibre 4 is placed between the flats 26. If the depth of the surface 8 is to be 0.085 mm, then the fibre 4 is placed between the flats 28 and if the depth of the optical surface 4 is to be 0.080 mm then the fibre 4 is placed between the flats 30. In each case, the segment 4' is removed in the manner described above. In all cases, the elliptical surface extends into the cladding, giving an optical window into the tap fibre.

In the case of the above examples, a tolerance of plus or minus 0.001 mm is acceptable.

The second jig 12, which is shown in Figures 6 to 8, for the tap fibre 6 is in the form of a block of a hard, erosion resistant material, for example stainless steel, as in the case of the jig 10. The jig 12 has opposite, parallel side faces 32, opposite parallel front and rear faces 34 and 36, respectively, and a bottom face 38 extending normally of the faces 32, 34 and 36. The front face 34 is higher than the rear face 36 so that the top face 40 of the jig 12 is angled by 15° with respect to the bottom face 38 and slopes downwardly towards the rear face 36. A horizontal bore 42 parallel with the bottom face 38 has a cable jacket receiving, larger cross section portion 44, having a diameter slightly exceeding 2.2mm, opening into the front face 34 and communicating with a smaller cross section fibre receiving bore portion 46, having a diameter slightly exceeding lmm, and having an elliptical mouth 47 opening into the angled top face 40 of the jig 12. The top face 40 is angled by 15° with respect to the longitudinal axis of the bore 42, in the embodiment shown.

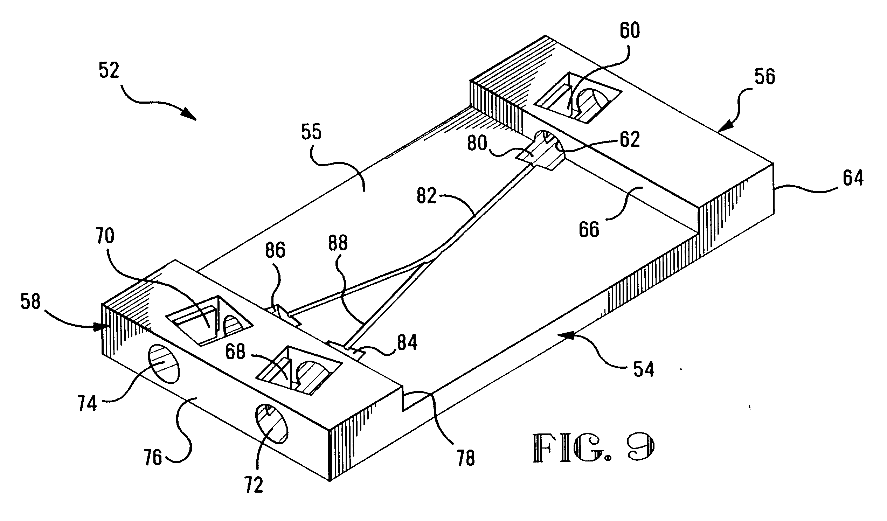

In order to provide the inclined optical end face 14 of the tap fibre 6, an end portion of the fibre 6 is stripped of its cable jacket 48 and is inserted into the bore 42 by way of the front face 34 of the jig 12 so that the stripped end portion of the fibre 6 is received in the bore portion 46 and the adjacent part of the cable jacket 48, which has an outside diameter of 2.2mm, is received in the bore portion 44, as shown in Figure 8. The free end 50 (indicated in broken lines in Figure 8) of the fibre 6 protrudes from the mouth 47 above the surface 40 of the jig 12.

In order to provide the optical surface 14 the protruding end 50 is preferably polished away, or is cut away, down to the top face 40 of the jig 12. Thereby, the free end of the fibre 6 is provided with an optical surface 14, which is angled by 15° with respect to the longitudinal axis of the fibre 6 and has the elliptical shape of the mouth 47 of the bore portion 46. The optical surface 14 is of the same length, namely 3.864 mm as the optical surface 4, but has a width of 1.0 mm.

The angle of the top face 40 may be more than, or less than, 15° in dependence upon the required length of the optical end face 14 and thus upon the required light splitting ratio of the optical tap coupler to be produced, the length of the optical surface 8 of the throughput fibre 4 being appropriately dimensioned.Thereby the output power of the coupler may be selected to be 90% to 10%, 80% to 20% or 70% to 30%, for example.

An optical fibre tap coupler housing 52 comprises, as shown in Figure 9, a flat, elongate base 54 having a top face 55 at one end of which is a first optical cable retention block 56 and at the other end of which is a second optical cable retention block 58. The block 58 has, opening into its upper face, an optical cable retention clip receiving recess 60 through which extends a first optical cable receiving through bore 62 opening into a front face 64 and a rear face 66 of the block 56. The block 58 has, opening into its upper face, second and third optical cable retention clip receiving recesses 68 and 70, respectively. Second and third optical cable receiving through bores 72 and 74, respectively, extend through the recesses 68 and 70, respectively, each of the bores 72 and 74 opening into both a front face 76 and a rear face 78 of the block 58. The bore 62 communicates at the rear face 66, with an optical cable receiving groove 80 in the top face 55, which in turn communicates with one end of an arcuate, throughput fibre receiving groove 82 of smaller cross section than the groove 80. The groove 82 is curved about the same radius namely 25mm as the groove 20 in the jig 10. The other end of the groove 82 communicates with an optical cable receiving groove 84 which in turn communicates with the bore 72. There extends from an optical cable receiving groove 86 communicating with the bore 74, one end of a rectilinear tap fibre receiving groove 88, the other end of which communicates with the groove 82 about half way along its length.

The throughput fibre 4 and the tap fibre 6 having been provided with their optical surfaces, 8 and 14, respectively, in the manner described above, the throughput fibre 4 is laid in the arcuate groove 82 and the tap fibre 6 is laid in the rectilinear groove 88, the optical face 8 of the fibre 4 being aligned with optical face 14 of the fibre 6. Since the throughput fibre 4 retains the radius imparted to it by the groove 20 of the jig 10, as mentioned above, and since the groove 82 of the housing 52 is of the same radius as the groove 20, the fibre 4 cannot rotate in the groove 82 so as to bring about misalignment between the optical faces 8 and 14. The optical faces 8 and 14 may be optically connected by means of a refractive index matching material having the same refractive index as the cores of the fibers 4 and 6. If these cores are of polymethyl methacrylate, said refractive index will be 1.492 and if the cores are of polycarbonate, said refractive index will be 1.586.

Alternatively, the optical faces 8 and 14 may be optically connected by means of a solution of polymethyl methacrylate plastic fibre in methylene chloride, which provides a true bond.

An appropriate refractive index matching material 90 is then placed at the free end of each of the fibers 4 and 6. A cover plate (not shown) is then secured to the base 54 so as to cover the top face 55 thereof, and retention clips 100 are placed in initial positions in the recesses 60, 68 and 70.

By virtue of the operations described above, a fibre optical tap connector 92 has been provided for supply to an end user for connecting fibre optic cables 94, 96 and 98, each having the fibre end portion which has been stripped of its cable jacket. In use of the connector 92, cable 94 is inserted through the bore 62 from the face 64 of the block 56 so that the free end of the fibre of the cable 94 engages in the index matching material 90 at one end of the throughput fibre 4 and butts against the free end thereof. The cable 96 is inserted through the bore 72 from the face 76 of the block 58 so that the free end of the fibre of the cable 96 engages in the index matching material 90 at the other end of the throughput fibre 4 and butts against the free end thereof. The cable 98 is inserted through the bore 74, from the face 76 of the block 58 so that the free end of the fibre of the cable 98 engages in the index matching material 90 at the free end of the fibre 6 and butts thereagainst. In order to secure the cables 94, 96 and 98 to the connector 92, each cable retention clip 100 is pressed down, from its initial position into the respective recesses 60, 68 and 70 whereby retention legs on each clip straddle and bite into the cable jacket of the respective cable.

It has been found that the light splitting ratio of an optical fibre tap coupler produced as described above with respect to the embodiments shown amounts to 1:8.5, the excess loss amounting to no more than 1dB. The method described above of preparing the throughput and the tap fibers may also be used with glass fibers, for example, plastic clad silica fibers or hard clad silica fibers, although the optical surfaces 8 and 14 are then produced by polishing rather than cutting.

## Claims

1. An optical tap coupler (2), comprising a length of throughput fibre (4), and a tap fibre (6), the tap coupler being characterized in that the throughput fibre (4) includes a first elliptical optical surface (8) extending lengthwise of the throughput fibre (4) and an end of the tap fibre (6) includes a second elliptical optical surface (14) extending obliquely across said end of the tap fibre (6), the two optical surfaces being joined to form an optical interface.

2. An optical tap coupler as claimed in claim 1, characterized in that the two optical surfaces (8, 14) are optically connected by means of a refractive index matching medium.

3. An optical tap coupler as claimed in claim 2, characterized in that the index matching medium is a bonding solution of polymethyl methacrylate plastic fibre in methylene chloride.

4. An optical tap coupler as claimed in any one of the preceding claims, characterized in that the first elliptical optical surface (8) is produced so as to be 3.86mm in length and 0.075mm in depth.

5. An optical tap coupler as claimed in any one of the preceding claims, characterized in that the second elliptical optical surface (14) is produced so as to be angled by a selected angle with respect to the longitudinal axis of the tap fibre (6).

6. An optical tap coupler as claimed in any one of the preceding claims, characterized in that the through fibre is curved, and the elliptical optical surface (8) is formed on the outer radial portion of the through fibre.

7. An optical tap coupler as claimed in any one of the preceding claims, further characterized by an insulative housing (52) having a groove portion (82) to receive the through fiber (4), and a groove portion (88) to receive the tap fiber (6).

8. An optical tap coupler as claimed in either of claims 6 or 7, characterized in that said groove portion (82) is curved about a radius equal to the radius of curviture of the through fibre (4).

9. A method of preparing an optical throughput fibre (4) and/or an optical tap fibre (6) for an optical tap coupler (2), the method being characterized by the steps of:
a) forming intermediate the length of the throughput fibre (4), a first elliptical optical surface (8) extending lengthwise of the throughput fibre (4); and/or
b) forming on an end of the tap fibre (6), a second elliptical optical surface (14) extending obliquely across said end of the tap fibre (6), and
c) joined said elliptical optical surfaces.

10. The method of claim 9, characterized in that the first (8) and/or the second (14) optical surface is provided by the steps of confining the optical fibre (4,6) in a jig (10,12) so that a predetermined portion (4',50) of the fibre (4,6) projects from at least one flat, hard surface (24,40) of the jig (10,12); and removing said projecting predetermined portion (4'',50) by polishing or cutting it away up to said at least one flat surface (24,40), thereby to produce said elliptical optical surface (8,14).

11. A method as claimed in claim 9 or 10, characterized in that in step (c) the throughput fibre (4) is located in an arcuate groove (20) in the jig (10) between two hard, flat surfaces (24) of the jig (10), said flat surfaces (24) being tangential with the groove (20) and said predetermined portion (4') of the throughput fibre (4) projecting beyond said two flat surfaces (24).

12. A method as claimed in claim 10, characterized in that the tap fibre (6) is inserted into the rectilinear bore (46) in the jig (12), the bore (46) having an elliptical mouth (47) opening into the hard, flat surface (40) of the jig (12), the flat surface (40) being inclined by a predetermined angle with respect to the longitudinal axis of the bore (46).

13. A method as claimed in any of claims 9-12, characterized by the further steps of laying the throughput fibre (4) in an arcuate groove (82) in a flat surface (55) of an optical tap coupler housing (52), the radius of the arcuate groove (82) of the housing (52) being equal to the radius of the arcuate groove (20) in the jig (10); laying the tap fibre (6) in a rectilinear groove (28) in said flat surface (55) of the housing (52), which groove (88) communicates with the arcuate groove (82) in the flat surface (55) of the housing (52) with the optical surface (14) of the tap fibre (6) in alignment with the optical surface (8) of the throughput fibre (4); and optically connecting said optical surfaces (8, 14) by means of a refractive index matching medium, thereby to produce said coupler (2).

14. A method as claimed in claim 13, characterized in that the index matching medium is a bonding solution of polymethyl methacrylate plastic fibre in methylene chloride.

15. A method as claimed in any one of the preceding claims 9-14, characterized in that the first elliptical optical surface (8) is produced so as to be 3.86mm in length and 0.075mm in depth.

16. A method as claimed in any one of the preceding claims 9-15, characterized in that the second elliptical optical surface (14) is produced so as to be angled by a selected angle with respect to the longitudinal axis of the tap fibre (6).

17. A jig (10) for use in forming an optical throughput fibre (4) for an optical tap coupler (2), with an elliptical optical surface (8) extending lengthwise of the throughput fibre (4), the jig (10) comprising a block made of an hard material and having formed therein an arcuate peripheral fibre receiving groove (20) having a base (21) of a predetermined cross-sectional radius, respective flats (24) of a pair of opposed, elongate flats (24) bounding each side of the groove (20) and being tangential therewith so that the depth of the groove (20) is progressively reduced towards the longitudinal centre of the flats (24) to a predetermined fraction of said predetermined cross-sectional radius.

18. A jig (10) as claimed in claim 17, wherein the groove (20) is circular, a plurality of said pairs of said flats (24,26,28,30) being distributed about the circumference of the groove and each pair of flats (24,26, 28,60) progressively reducing the depth of the groove (20) towards the longitudinal centre of the flats of the pair to a different predetermined fraction of said predetermined radius.

19. A jig (10) as claimed in claim 18, wherein the groove (20) is of increased depth between said pairs of flats (24,26,28,30).

20. A jig (12) for use in forming on an end of a tap fibre (6) for an optical tap coupler (2), an elliptical optical surface (14) extending obliquely across the said tap fibre (6), the jig (12) comprising a block made of a hard material, having a through, fibre receiving, rectilinear bore (42) opening at one end into a first surface (44) of the block, the opposite end of the bore (42) opening into a flat second surface (40) of the block, the flat second (40) surface being inclined by a predetermined angle with respect to the longitudinal axis of the bore (42) whereby the bore (42) has an elliptical mouth (47) opening into the inclined second surface (40).
